# EUROPEAN PATENT SPECIFICATION

(11) **EP 0 881 438 B1**
(45) Date of publication and mention of the grant of the patent: **03.12.2008**
(21) Application number: 98201791.5
(22) Date of filing: 29.05.1998
(51) Int. Cl.: F24H 9/12

(54) **Inlet for a water heate**
Wassereinlass für einen Wassererhitzer
Entrée d'eau pour chauffe-eau

(30) Priority: 29.05.1997 US 865006; 29.05.1997 US 865051
(43) Date of publication of application: 02.12.1998
(73) Proprietor: Bradford White Corporation, Ambler, PA 19002 (US)
(72) Inventor: Lannes, Eric M., Kentwood, Michigan 49508 (US)
(74) Representative: Quintelier, Claude

(56) References cited:
- EP-A- 0 126 801
- DE-U- 9 007 155
- US-A- 2 095 702
- US-A- 5 341 770
- US-A- 5 485 879
- PATENT ABSTRACTS OF JAPAN vol. 010, no. 333 (M-534), 12 November 1986 (1986-11-12) & JP 61 138055 A (NISHIHARA EISEI KOGYOSHO:KK), 25 June 1986 (1986-06-25)

## Description

This invention relates to an inlet adapted for delivering water into a water heater tank through a port defined in a wall of said tank, said inlet comprising an inlet conduit having a longitudinally extending flow passageway and a proximal portion defining a flow opening for water flow into said flow passageway, and a distal portion extending, from said proximal, portion and having an end opening, facing towards a bottom of said tank, wherein a plurality of wall openings are defined in said inlet conduit for water flow from said flow passageway, said inlet also comprising deflecting means extending within said inlet conduit and into a path of said water flow said deflecting means being positioned downstream from and adjacent to at least one of said wall openings for deflecting at least a portion of said water flow outwardly through said wall openings, said inlet conduit being provided with a central region (c) of unobstructed flow through a plane in which said deflecting means extend. It is preferably connected into the water heater tank through the top or a side wall. Such an inlet is known from US-A-5,341,770.

The generation of temperature gradients in water heaters above the desired outlet temperature represents a serious problem. Heating of water promotes the precipitation of sediment, and excessive temperature gradients tend to accelerate sediment precipitation. Accumulated sediment tends to harden, forming a scale on various tank surfaces, which reduces water heater efficiency and, in many cases, can lead to failure.

Also, excessive temperature gradients tend to cause excessive temperature fluctuations. Such fluctuations bring about undue fatigue of the water heater tank and can reduce water heater longevity.

Furthermore, excessive temperature gradients within the water heater's tank can tend to reduce the draw-off ability of the water heater and can decrease the water heater's response time. Both of these conditions compromise water heater efficiency.

### Objects of the Invention

It is an object of the invention to provide an inlet adapted to reduce the generation of temperature gradients that tend to develop in water heater tanks, and to provide a cost effective inlet that is easy to install at the top or side of a water heater.

For this purpose an inlet according to the present invention is characterized in that a ring-type groove is formed in the outer surface of a fitting engaging the proximal portion, said ring-shaped groove being adapted to permit rotational movement of the inlet conduit with respect to the fitting along its axis.

Other objects of the invention will become clear from the drawings and descriptions that follow.

### Brief Description of the Drawings

Fig. 1 is a side view of an embodiment of a top inlet according to this invention.
Fig. 2 is an end view of the top inlet shown in Fig. 1.
Fig. 3 is a side view of a portion of the top inlet shown in Fig. 1.
Fig. 4 is a cross-sectional side view of a detail of the top inlet shown in Fig. 3.
Fig. 5 is a side view of another embodiment of a top inlet according to this invention.
Fig. 6 is a side view of an embodiment of a water heater comprising the top inlet shown in Fig. 1 or Fig. 5.
Fig. 7 is a side view of an embodiment of a side inlet according to this invention.
Fig. 8 is a front end view of a portion of the side inlet shown in Fig. 7.
Fig. 9 is a rear end view of a portion of the side inlet shown in Fig. 7.
Fig. 10 is a rear end view of another portion of the side inlet shown in Fig. 7.
Fig. 11 is a cross-sectional side view of a detail of the side inlet shown in Fig. 9.
Fig. 12 is a side view of an embodiment of a water heater comprising the side inlet shown in Fig. 7.

### Summary of the Invention

This invention relates to an inlet adapted for delivering water into a water heater tank through a top port. The inlet includes a conduit having a proximal portion with a flow opening for water flow into the inlet from a water source. The conduit extends from the proximal portion downwardly to a distal end portion, which includes a flow opening for water flow from the conduit into the tank. The conduit defines a longitudinal flow passage. A plurality of wall openings is provided for radial flow from the flow passage. Means such as a deflector is provided within the conduit adjacent to each of the wall openings. They extend into the flow passage for deflecting at least a portion of the water flow radially outwardly through the wall openings.

Upon installation of the inlet into the water heater tank, the proximal portion of the conduit extends through the tank's top port and the distal end portion extends downward toward a bottom surface of the tank. As water flows into the tank, the wall openings and the deflecting means co-act to reduce the generation of temperature gradients in the tank.

This invention also relates to a water heater that is capable of reducing the generation of such temperature gradients. It includes an inlet conduit, as described, as well as a fitting for engaging the inlet conduit to the tank's top port.

Another embodiment relates to an inlet delivering water into a water heater tank through a side port. The inlet includes a conduit having a proximal portion with a flow opening for water flow into the inlet from a water source. The conduit also includes an intermediate portion that extends from the proximal portion to a distal portion, which includes a flow opening for water flow from the conduit into the tank. The proximal, intermediate and distal portions together define a flow passage. Means such as a deflector is provided within the distal portion of the conduit. It extends into the flow passage for deflecting the water flow.

Upon installation of the inlet into the water heater tank, the proximal portion of the conduit extends through the tank's side port, the intermediate portion extends toward an interior region of the tank and the distal portion extends downward toward a bottom of the tank. As water flows into the tank, the distal portion of the conduit and the deflecting means co-act to reduce the generation of temperature gradients in the tank.

This invention also relates to a water heater that is adapted to reduce the generation of such temperature gradients. It includes an inlet conduit, as described, as well as a fitting for engaging the inlet conduit to the tank's side port. The water heater is capable of reduced temperature gradients in accordance with an object of this invention.

### Detailed Description of the Invention

The following description is intended to refer to specific embodiments of the invention illustrated in the drawings. While a specific configuration has been selected for illustration, the flow pattern of incoming water is highly effective with various modifications. This description is not intended to define or limit the scope of the invention, which is defined separately in the claims that follow. Also, it will be appreciated that the drawings are not necessarily to scale and are merely provided for the purpose of illustration.

Generally speaking, the invention relates to an inlet adapted for delivering cold water into the storage tank of a water heater. Although the invention has been discovered to be highly beneficial for use in gas-fired water heaters that are intended for commercial use, the inlet is highly effective in electric, oil-fired and any other type of residential or commercial water heater.

The inlet includes a conduit that is sized and shaped to be installed through the top port of a water heater. It has a proximal portion that is to be connected to the tank's top port by means of a fitting. Extending from the proximal portion is a distal portion that terminates at a flow opening for introducing water from the conduit and into the tank's interior.

Upon installation of the inlet into the water heater's tank, the proximal portion of the inlet conduit preferably extends through the tank's top port. The conduit extends downwardly from the proximal portion, preferably along a vertical axis. The distal portion preferably extends downwardly toward a bottom of the tank and terminates at an end opening that is most preferably positioned adjacent to the tank's bottom surface.

The inlet conduit is preferably provided with a substantially tubular shape with a substantially constant cross-sectional area for the flow passage that extends through the proximal and distal portions. The flow opening is optionally reduced or constricted. The preferred inlet conduit defines a substantially continuous flow passageway extending from a proximal end outside the tank to a distal end oriented toward the tank's bottom.

A plurality of wall openings are provided in the wall of the conduit at locations between the proximal and distal ends of the conduit, preferably closer to the distal end. The wall openings provide passages for flow from the longitudinal flow passageway in the conduit radially outwardly into the tank's interior.

A means, such as one or more flow deflectors or an equivalent structure, is connected within the inlet conduit adjacent to each of the wall openings. The means is positioned to extend into the water flow path in order to deflect the water flow as it travels through the inlet conduit radially outwardly through an adjacent wall opening toward the tank's interior. In a preferred embodiment, the means for deflecting the water flow includes an angled surface positioned adjacent to the conduit's wall and extending within the conduit into the water flow path. The means can be any deflector or element that redirects the water flow as it passes through the conduit toward the tank's interior. Most preferably, it takes the form of a tab that is connected in the conduit's wall and that extends toward the central axis of the conduit. Such a preferred tab is located adjacent to a hole in the conduit's wall, perhaps a hole created by forming the tab. Most preferably such a tab is positioned just downstream from the wall opening. Although the means for deflecting the water flow is preferably integral with the inlet conduit or the wall thereof, it can be formed from a separate component that is attached to the conduit by a fastener, snap-in or press-fit engagement, weld, threads, or any other known or equivalent fastening means.

A threaded fitting is preferably used to connect the inlet conduit to the tank's top port. In a preferred embodiment, a threaded fitting is engaged over the proximal portion of the inlet conduit so that it can be threaded into a spud attached to the water heater tank's top. The fitting is preferably engaged to the inlet conduit so that longitudinal movement of the inlet conduit through the fitting is prevented. In a preferred structure, this is accomplished by forming a ring-type groove in the outer surface of the fitting in order to create a radially inwardly extending surface within the fitting that can capture the conduit. It is this ring groove that prevents such longitudinal movement.

Although the deflecting means and wall openings are preferably positioned along the conduit so that the orientation of the conduit about its longitudinal axis is not critical for optimal performance, the ring groove can be adapted to permit rotation of the inlet conduit even after the inlet is installed in the water heater. Accordingly, a means is preferably provided for rotating the conduit in the fitting to adjust the conduit's orientation. The means may include a recess, such as a slot for example, or any surface positioned near or at the proximal end of the conduit. Engagement of such a surface facilitates the conduit's rotation after the fitting is threaded into the spud. A visual indicator is preferably provided to indicate the orientation of the conduit from outside of the tank.

In an optional feature of the invention, the proximal end of the inlet conduit extends outwardly beyond the proximal end of the fitting. This feature provides unobstructed access to the proximal end of the conduit for rotational adjustment. Also, when a source of cold water is connected to the proximal end of the fitting to make the necessary connection, the proximal end of the inlet conduit can extend outwardly beyond the end of the fitting. It has been discovered that water flow from the source into the inlet is directed toward the central interior region of the inlet. Such flow reduces the wear and erosion that can otherwise be caused when flowing water directly impacts against the fitting. Instead, a buffer of slow-moving water is trapped adjacent to the fitting's end. Such an optional feature may be especially desirable when dielectric insulation is positioned between the fitting and the conduit. The optional extension of the conduit beyond the fitting's end prevents accelerated erosion of the dielectric insulation.

The invention further relates to an inlet adapted for delivering cold water through a side port. Although the invention has been discovered to be highly beneficial for use in gas-fired water heaters that are intended for commercial use, the inlet is highly effective in electric, oil-fired and any other residential or commercial water heaters.

The inlet has a proximal portion that is to be connected to the tank's side port by means of a fitting. Extending from the proximal portion is an intermediate portion that is intended to be positioned within the tank so that it extends from the side port and preferably toward a central region of the tank's interior, most preferably toward the central, vertical axis of the water heater. From the end of the intermediate portion extends a distal portion that terminates at a flow opening for introducing water from the conduit and into the tank's interior.

Upon installation of the inlet into the water heater's tank, the proximal portion of the inlet conduit preferably extends through the tank's side port. The intermediate portion preferably extends toward the tank's interior. Most preferably, the intermediate portion is horizontal or near horizontal so that it extends toward the tank's interior in a plane that is substantially parallel to the tank's bottom. The distal portion preferably extends downwardly toward a bottom of the tank. From the downstream end of the intermediate portion, the conduit's distal portion most preferably curves downwardly toward the tank's bottom surface. Such curvature is preferably gradual so that the conduit can easily be formed by a bending process, if desired.

The flow opening through which water flows from the inlet is positioned at the downstream end of the distal portion. The opening is preferably oriented at some angle to the axis of the distal portion. In other words, the flow opening preferably lies in a plane that is at an angle to the distal portion's axis; most preferably an acute angle such that the opening generally faces the central region of the tank's interior.

The inlet conduit is preferably provided with a substantially tubular shape with a substantially constant cross-sectional area for the flow passage that extends through the proximal, intermediate and distal portions and through the flow opening. The preferred inlet conduit defines a substantially continuous flow passageway extending from a proximal end outside the tank to a distal end oriented toward the tank's bottom central region.

A means, such as one or more flow deflectors or an equivalent structure, is connected adjacent to and within the distal portion of the inlet conduit and is positioned to extend into the water flow path in order to deflect the water flow as it travels through the inlet conduit toward the tank's interior. In a preferred embodiment, the means for deflecting the water flow includes an angled surface positioned adjacent to the distal portion's wall and extending within the distal portion into the water flow path. The means can be any deflector or element that redirects or disturbs the water flow as it passes through the distal portion toward the tank's interior. Most preferably, it takes the form of a tab that is connected in the distal portion's wall and that extends toward the central axis of the conduit. Although such a preferred tab may be located adjacent to a hole in the distal portion's wall, perhaps a hole created by forming the tab, it is not necessary for such a hole to exist and the conduit's end opening may be the only opening. Also, although the means for deflecting the water flow is preferably integral with the inlet conduit or the wall thereof, it can be formed from a separate component that is attached to the distal portion by a fastener, snap-in or press-fit engagement, weld, threads, or any other known or equivalent fastening means.

A threaded fitting is preferably used to connect the inlet conduit to the tank's side port. In a preferred embodiment, a threaded fitting is engaged over the proximal portion of the inlet conduit so that it can be threaded into a spud attached to the water heater tank's wall. The fitting is preferably engaged to the inlet conduit so that longitudinal movement of the inlet conduit through the fitting is prevented although rotational movement of the inlet conduit about the conduit's axis is permitted. In a preferred structure, this is accomplished by forming a ring-type groove in the outer surface of the fitting in order to create a radially inwardly extending surface within the fitting that can capture the conduit. It is this ring groove that prevents such longitudinal movement while permitting rotational movement.

Such rotational movement of the conduit in the fitting confers a significant benefit because the downward orientation of the conduit's distal portion should be maintained for optimal performance of the inlet and because this orientation will change as the fitting is threaded into the tank. Accordingly, a means is preferably provided for rotating the conduit in the fitting to adjust the orientation of the distal portion. The means may include a recess, such as a slot for example, or any surface positioned near or at the proximal end of the conduit. Engagement of such a surface facilitates the conduit's rotation after the fitting is threaded into the spud. A visual indicator is preferably provided to indicate the orientation of the conduit from outside of the tank.

In another preferred feature of the invention, the proximal end of the inlet conduit extends outwardly beyond the proximal end of the fitting. This preferred feature provides unobstructed access to the proximal end of the conduit for rotational adjustment. Also, when a source of cold water is connected to the proximal end of the fitting to make the necessary connection, the proximal end of the inlet conduit extends outwardly beyond the end of the fitting. It has been discovered that water flow from the source into the inlet is directed toward the central interior region of the inlet. Such flow reduces the wear and erosion that can otherwise be caused when flowing water directly impacts against the fitting. Instead, a buffer of slow-moving water is trapped adjacent to the fitting's end. Such a preferred feature is especially desirable when dielectric insulation is positioned between the fitting and the conduit. The preferred extension of the conduit beyond the fitting's end prevents accelerated erosion of the dielectric insulation.

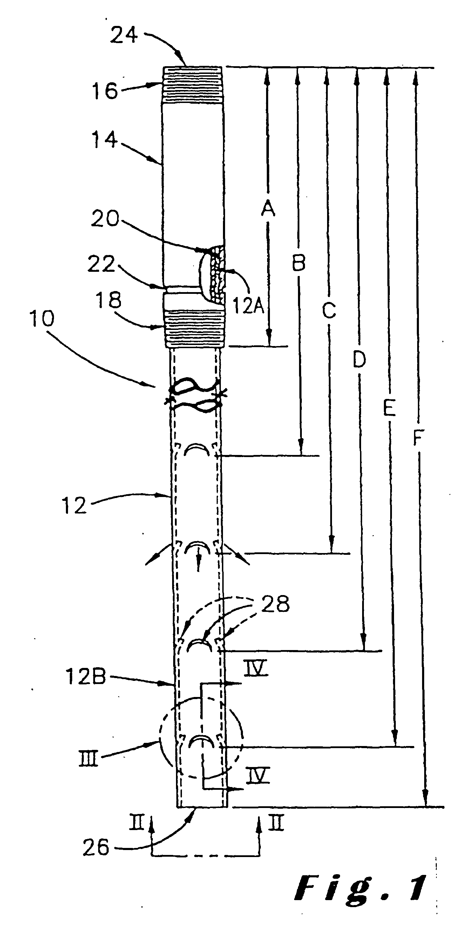

Referring to Figs. 1-4, a preferred embodiment of an inlet according to this invention, designated by the numeral "**10**", will now be described. Fig. 1 shows a side view of inlet **10** having an inlet conduit **12** with a proximal portion **12A** and a distal portion **12B** that extends to the end of the inlet conduit. Together, portions **12A** and **12B** define a continuous flow passageway with a tubular cross-section, although other cross-sections are contemplated as well. In this embodiment, portions **12A** and **12B** share the same axis, and portion **12B** is substantially an extension of portion **12A**. The inlet conduit can be formed from plastic or metal, as desired.

Engaging the proximal portion **12A** of the conduit is a fitting **14** that is preferably formed from a metal such as steel. Fitting **14** includes male pipe threads **16** and **18** at each end. Pipe thread **16** is used for water-tight connection to a source of cold inlet water (not shown). Pipe thread **18** is intended for threaded engagement of fitting **14** into the spud of a water heater's storage tank (not shown in Fig. 1). Within fitting **14**, and captured between fitting **14** and the inlet conduit, is a dielectric insulator **20**, preferably in the form of an insulating polymeric tube. Dielectric insulator **20** provides dielectric isolation between the metallic fitting **14** and the inlet conduit.

A ring-type groove **22** is formed in the outer surface of fitting **14** by known manufacturing methods. The groove **22** provides the interior surface of fitting **14** with a radially inwardly extending surface that captures dielectric insulator **20** as well as proximal portion **12A** of the inlet conduit. A ring groove is preferably used to serve this purpose because it prevents longitudinal movement of the inlet conduit through fitting **14**, along its axis. At the same time, groove **22** can be adapted to permit rotational movement of the inlet conduit with respect to the fitting **14** so that their relative positions can be adjusted, if desired. A proximal end **24** of the inlet conduit optionally extends outwardly beyond the proximal end of the fitting **14** in the preferred embodiment for the reasons set forth in the general description of the invention. Although not shown, the proximal end of the inlet conduit preferably includes a pair of slots, or some other equivalent recess or surface, in order to facilitate rotation of the conduit within the fitting **14**. A tool can be positioned across such slots and rotated until a desired position is obtained, if necessary. The slots themselves, or a separate indicator such as an arrow or other indicia, can act to signify the orientation of the conduit with respect to the fitting and tank.

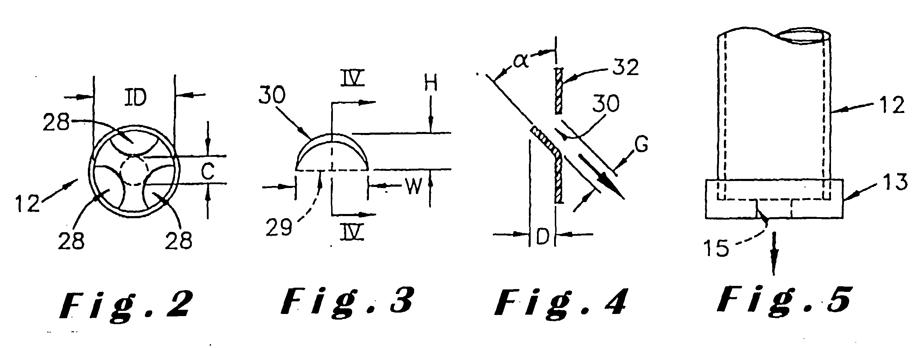

At the other end of the inlet conduit, an opening **26** is provided at the downstream end of distal portion **12B**. In this preferred embodiment, opening **26** occupies a plane that is substantially horizontal and normal to the longitudinal axis of portions **12A** and **12B**. The opening **26** extends entirely across the distal portion **12B** and, when viewed from the bottom (Fig. 2), it has a cross-sectional area as large as the cross-sectional area of the flow passageway through the inlet conduit.

One possible form of a deflector or deflecting means is designated with the numeral "**28**", although many other possible forms and configurations are contemplated. In this embodiment, a plurality of deflectors or tabs **28** are integrally connected to the interior surface along distal portion **12B** of the inlet conduit. Tabs **28** extend inwardly toward the central region of the flow passageway in order to deflect the water flow through adjacent wall openings **30** that are located just upstream of corresponding deflectors. The tabs **28** cooperate with the inlet conduit to reduce the generation of temperature gradients within the water heater.

Further details of a preferred tab **28** will now be described with reference to Figs. 2, 3 and 4. Tab **28**, in this embodiment, takes the form of an integral, semi-circular tab that is cut into the wall of the inlet conduit and bent along a fold line **29** (Fig. 3) in a direction toward the conduit's central axis. In so doing, the corresponding opening **30** is created in the conduit's wall adjacent to and upstream of tab **28**. It is important to note that tab **28** can be formed in a wide variety of manners. In fact, deflector **28** can be formed as an entirely separate component that can be attached to, or mounted within, the distal portion **12B** of the inlet conduit.

As shown in Fig. 4, which provides a cross-sectional view of a portion of a wall **32** in the distal portion **12B**, the tab **28** extends into the flow path at an angle such as angle "α". The distance it extends into the flow path is designated by the letter "D" in Fig. 4, and the size of the gap or opening **30** adjacent to the tab **28** is indicated by the letter "G". Angle α is preferably an acute angle in order to best deflect the water flow out through the wall openings.

Although only one deflector means arrangement is illustrated in the embodiment shown in the Figures, it is of course contemplated that a wide variety of arrangements can be used and that deflecting means can be positioned in a variety of locations and orientations.

Referring again to Fig. 1, the preferred embodiment of inlet **10** includes a series of tabs **28** positioned in four planes separated along the length of distal portion **12B**. Three tabs **28** are preferably provided in each of the four planes. Referring to Fig. 2, deflectors **28** extend inwardly and upwardly toward the central axis of the longitudinal flow passageway. In this embodiment, tabs **28** extend inwardly from the wall **32** of inlet conduit **12** from its inside diameter **ID**. Shown in dotted lines is a central region **C** of unobstructed flow through the plane of tabs **28**. Central region **C** can vary in diameter from zero or near zero to a diameter corresponding to the inside diameter of the inlet. However, central region **C** is preferably limited in diameter so that significant flow is directed through the wall openings. Most preferably, the cross-section area of central region **C** is substantially less than the cross-sectional area of inside diameter **ID**. For example, each tab **28** most preferably blocks between about 10% and 50% of the flow path, although smaller and larger tabs are contemplated as well.

In operation, as water flows downwardly through the flow passageway, a portion of the water flow impinges against tabs **28** and is swept radially outwardly in the general direction indicated by the arrows in Figs. 1 and 4. The rest of the water flow that remains in the flow passageway exits inlet conduit **12** through end opening **26** toward the bottom of the tank. Accordingly, water flows out through each of the wall openings **30** (by action of the adjacent tabs **28**) and through end opening **26**. This preferred flow pattern is capable of reducing the generation of temperature gradients within the water heater's tank.

Referring now to Fig. 3, each tab **28** has a width **W** and a height **H**, which also corresponds to the dimensions of the adjacent wall opening **30** in this embodiment. Together, width **W** and height **H** define the surface area of the deflector, which can be adjusted depending on factors such as the number of deflectors used, the relative position of the deflectors, the inside diameter ID of the inlet conduit 12 (Fig. 2), the capacity and diameter of the water heater's tank, and the position of the deflector along the length of inlet conduit 12.

Inlet conduit 12 is especially well adapted for use in commercial water heaters and, accordingly, may have an inside diameter as large as about 31,75 mm (1 ¼") or larger. For this reason, tabs 28 should be large enough to "pull" or redirect a significant portion of the water flow out from the flow passageway. In order to encourage such flow, inlet 12 is optionally provided with a constriction such as the plug 13 shown in Fig. 5 in order to form a reduced flow opening 15 for flow into the tank. Such a reduced opening increases the pressure in the inlet conduit 12 to encourage maximum flow through tabs 28.

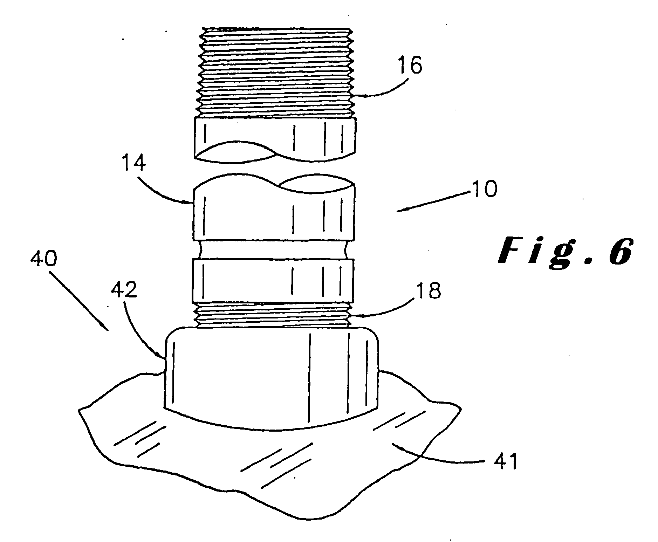

Referring now to Fig. 6, a portion of a water heater 40 is illustrated with an inlet according to this invention as a component thereof. Water heater 40 includes an inlet spud 42 with female pipe threads (not shown) positioned on a top surface 41. Male pipe threads 18 of fitting 14 are threaded into spud 42 in the usual manner until inlet 10 is sealingly engaged to the water heater 40. In order to install inlet 10, a pipe wrench or other tool can be used to rotate fitting 14 with respect to spud 42 to engage the threads. When the desired water-tight seal is created between the fitting and the spud, the orientation of the inlet conduit can then be adjusted (if necessary). Thereafter, the source of cold inlet water (not shown) can be connected to the male threads 16 on the proximal end portion of fitting 14. The inlet is then ready for use in operation.

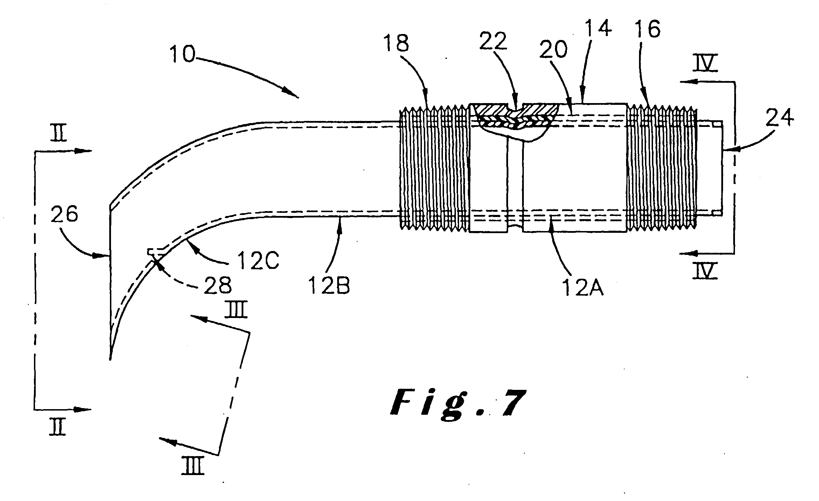

Referring to Figs. 7-11, a preferred embodiment of an inlet according to this invention, designated by the numeral "10", will now be described. Fig. 7 shows a side view of inlet 10 having an inlet conduit with a proximal portion 12A, an intermediate portion 12B extending from the downstream end of the proximal portion, and a distal portion 12C that extends from the downstream end of the intermediate portion 12B to the end of the inlet conduit. Together, portions **12A**, **12B** and **12C** define a continuous flow passageway with a tubular cross-section, although other cross-sections are contemplated as well. In this embodiment, portions **12A** and **12B** share the same axis, and portion **12B** is substantially an extension of portion **12A**. The axis of portion **12C** curves downwardly from that of portions **12A** and **12B**. The inlet conduit can be formed from plastic or metal, as desired.

Engaging the proximal portion **12A** of the conduit is a fitting **14** that is preferably formed from a metal such as steel. Fitting **14** includes male pipe threads **16** and **18** at each end. Pipe thread **16** is used for water-tight connection to a source of cold inlet water (not shown). Pipe thread **18** is intended for threaded engagement of fitting **14** into the spud of a water heater's storage tank (not shown in Fig. 7). Within fitting **14**, and captured between fitting **14** and the inlet conduit, is a dielectric insulator **20**, preferably in the form of an insulating polymeric tube. Dielectric insulator **20** provides dielectric isolation between the metallic fitting **14** and the inlet conduit.

A ring-type groove **22** is formed in the outer surface of fitting **14** by known manufacturing methods. The groove **22** provides the interior surface of fitting **14** with a radially inwardly extending surface that captures dielectric insulator **20** as well as proximal portion **12A** of the inlet conduit. A ring groove is preferably used to serve this purpose because it prevents longitudinal movement of the inlet conduit through fitting **14**, along its axis. At the same time, groove **22** permits rotational movement of the inlet conduit with respect to the fitting **14** so that their relative positions can be adjusted. A proximal end **24** of the inlet conduit extends outwardly beyond the proximal end of the fitting **14** in the preferred embodiment for the reasons set forth in the general description of the invention.

At the other end of the inlet conduit, an opening **26** is provided at the downstream end of distal portion **12C**. In this preferred embodiment, opening **26** occupies a plane that is substantially vertical and normal to the axis of portions **12A** and **12B**. It is most preferably oriented at an acute angle with respect to the axis of distal portion **12C**. The opening **26** extends entirely across the distal portion **12C** and, when viewed from the left in Fig. 7, it has a cross-sectional area at least as large as the cross-sectional area of the flow passageway through the inlet conduit.

One possible form of a deflector or deflecting means is designated with the numeral "**28**", although many other possible forms and configurations are contemplated. In this embodiment, deflector **28** is integrally connected to the interior, lower surface of distal portion **12C** of the inlet conduit. Deflector **28** extends inwardly toward the central region of the flow passageway in order to deflect the water flow and to cooperate with the inlet conduit to reduce the generation of temperature gradients within the water heater.

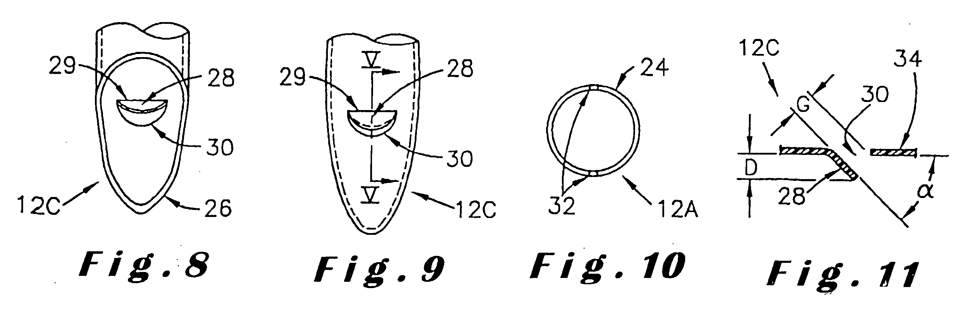

Further details of preferred deflector **28** will now be described with reference to Figs. 8, 9 and 11. Deflector **28**, in this embodiment, takes the form of an integral semi-circular tab that is cut into the wall of the inlet conduit and bent along a fold line **29** toward the conduit's central axis. In so doing, an opening **30** is created in the conduit's wall adjacent to and downstream of deflector **28**. Although such an opening may be preferred, it is important to note that deflector **28** can be formed in a wide variety of manners both with and without the formation of a hole in the conduit's wall. In fact, deflector **28** can be formed as an entirely separate component that can be attached to, or mounted within, the distal portion **12C** of the inlet conduit.

As shown in Fig. 11, which provides a cross-sectional view of a portion of a wall **34** in the distal portion **12C**, the deflector **28** extends at an angle such as angle "α" a predetermined distance into the flow path defined by the inlet conduit. This distance is designated by the letter "D" in Fig. 11, and the size of the gap or opening **30** adjacent to the deflector **28** is indicated by the letter "G". Although only one deflector means is illustrated in the embodiment shown in the Figures, it is of course contemplated that more than one deflector can be used and that they can be positioned in a variety of locations and orientations.

Fig. 10 illustrates a preferred embodiment of the proximal end of the inlet conduit. It preferably includes a pair of slots **32**, or some other equivalent recess or surface, in order to facilitate rotation of the conduit within the fitting **14**. In this embodiment, a tool can be positioned across slots **32** and rotated until the distal portion **12C** of the inlet conduit is facing in the optimal direction, which is toward a bottom region of the water heater tank. The slots **32** themselves, or a separate indicator such as an arrow or other indicia, act to signify the orientation of the conduit with respect to the fitting and tank.

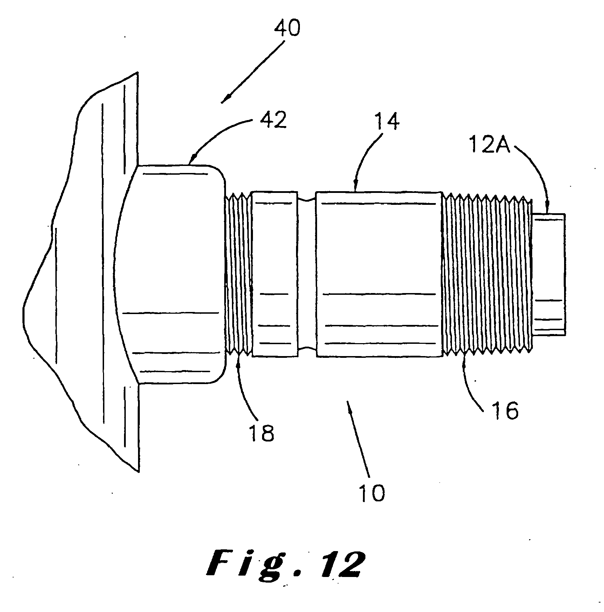

Referring now to Fig. 12, a portion of a water heater **40** is illustrated with an inlet according to this invention as a component thereof. Water heater **40** includes an inlet spud **42** with female pipe threads (not shown). Male pipe threads **18** of fitting **14** are threaded into spud **42** in the usual manner until inlet **10** is sealingly engaged to the water heater **40**. In order to install inlet **10**, a pipe wrench or other tool can be used to rotate fitting **14** with respect to spud **42** to engage the threads. When the desired water-tight seal is created between the fitting and the spud, the orientation of the inlet conduit can then be adjusted utilizing the slots **32** shown in Fig. 10 so that distal portion **12C** is directed toward the tank's bottom. Thereafter, the source of cold inlet water (not shown) can be connected to the male threads **16** on the proximal end portion of fitting **14**. The inlet is then ready for use in operation.

The following Examples illustrate significant benefits according to this invention. The Examples are provided for illustrative purposes only, and they are not intended to limit the invention in any way.

### EXAMPLE 1

An inlet such as the one illustrated in Fig. 1 was constructed and tested in commercial water heaters heated by gas-fired burners. The inlet was tested in comparison to a conventional top inlet that comprised a dip tube connected to the tank spud. The relative inlet performances were measured in relation to so-called "stacking" or "build-up". The stacking effect is described in U.S. Patent No. 5,341,770, incorporated herein.

In this test, each water heater was allowed to heat up to a predetermined storage tank temperature of 82,2 °C (180°F). Immediately after the main burner turned off, water was drawn off at a rate of 18,9 liters (5 gallons) per minute. The draw continued until the heater's thermostat called for heat (the main burner turned on). This cycle was repeated continuously until the measured outlet water temperature did not vary by more than 0,055°C (1°F) for three consecutive draws. The test results are summarized in the following Table 1.

**Table 1**

| Water | Input | Max. Temp. | Temp. Gradient | Max. | Temp. | Decrease |
|---|---|---|---|---|---|---|
| Heater | (BTUs) | (°C) | above 82,2°C | Temp. | Gradient | in Temp. |
| Capacity | | (conventional | (°C) | (°C) | above | Gradient |
| (liters) | | inlet) | (conventional | (Fig. 1 | 82,2°C | (%) |
| | | | inlet) | inlet) | (°C) (Fig. | |
| | | | | | 1 inlet) | |
| 378,53 | 88,000 | 93,3 | 11,11 | 91,1 | 8,88 | 20 |
| 378,53 | 250,000 | 96,6 | 14,44 | 92,2 | 10 | 31 |
| 302,82 | 250,000 | 95,5 | 13,33 | 89,8 | 7,77 | 42 |

The tests revealed that the temperature gradient resulting from stacking was reduced by replacing a conventional top inlet with the inlet embodiment shown in Fig. 1. The temperature gradient above 82,2°C (180°F) starting point was reduced by as much as 42%. Such reduced temperature stratification is expected to reduce lime precipitation, lengthen the life of the water heater, and reduce or even eliminate the need for periodic cleaning to remove precipitated sediment.

### EXAMPLE 2

An inlet such as the one illustrated in Fig. 1 was tested in commercial storage-type water heaters. The inlet was tested in comparison to a conventional top inlet, as in Example 1, to measure relative inlet performance in relation to so-called "draw-off ability", which is the ability of the storage water heater to deliver as much water as possible before the water's outlet temperature drops below a predetermined temperature.

In this test, each storage water heater was allowed to heat up to a predetermined storage tank temperature of 82,2°C (180°F). Once the burners turned off, they were disconnected from the water heater's thermostat. Water was then drawn off at a rate of about 18,9 liters (5 gallons) per minute and the temperature of the outlet water was measured along with its volume. The draw was continued until the outlet temperature dropped to about 65,5°C (150°F). The test results are summarized in the following Table 2.

**Table 2**

| Storage Water | Input (bus) | Drawn-off Volume | Drawn-off | Volumetric |
|---|---|---|---|---|
| Heater Capacity | | (liters) | Volume (liters) | Increase (%) |
| (liters) | | (conventional inlet) | (Fig. 1 inlet) | |
| 283,84 | 160,000 | 286 | 295 | 3 |
| 302,82 | 250,000 | 291 | 300 | 3 |
| 378,53 | 250,000 | 491 | 509 | 4 |
| 378,53 | 300,000 | 314 | 345 | 10 |

The tests revealed that the drawn-off volume before reaching 65,5°C (150°F) was increased by replacing a conventional top inlet with the inlet embodiment shown in Fig. 1. The drawn-off volume was increased by as much as 25,5 liters (7 gallons) (10%). Accordingly, more hot water is available during a draw and hot water is available for a longer period of time. Also, the increase in the drawn-off volume is expected to reduce temperature spikes at the delivery point and reduce the amount of work required for any external equipment such as booster water heaters.

### EXAMPLE 3

An inlet such as the one illustrated in Fig. 1 was further tested in commercial water heaters in relation to so-called "burner on time". The amount of elapsed time was measured between burner shut-off and actuation of the thermostat to call for heat. The test was similar to the test described in Example 2 except, instead of measuring the water temperature, the time until the thermostat calls for heat was measured. The results of this test are summarized in Table 3.

**Table 3**

| Water Heater | Input | Elapsed Time | Elapsed Time | Time |
|---|---|---|---|---|
| Storage Capacity | (BTUs) | (seconds) | (seconds) (Fig. | Increase |
| (liters) | | (conventional inlet) | 1 inlet) | (%) |
| 302,82 | 250,000 | 124 | 128 | 3 |
| 378,53 | 250,000 | 127 | 129 | 2 |
| 378,53 | 300,000 | 185 | 215 | 16 |
| 378,53 | 88,000 | 174 | 187 | 7 |

This test revealed that the amount of time in between the point when the burners are turned off and the point when the thermostat later calls for heat was significantly increased by replacing a conventional top inlet with the inlet embodiment shown in Fig. 1. The time was increased by as much as 30 seconds (16%), which is expected to reduce thermostat cycling and tank fatigue.

The exact reason for these significant benefits is not certain. Nevertheless, it is speculated that the openings in the wall of the inlet conduit, together with the utilization of means for deflecting the water flow path through the openings, creates an extremely beneficial flow pattern. In the preferred configuration, it creates a number of streams that are directed out to the side of the conduit and downwardly at an angle as the water enters the interior of the tank. It is believed that such a flow pattern creates a thermal balance within the storage tank and enables a more rapid equilibrium between any stratified layers. Accordingly, the water temperature differential from side-to-side and from top-to-bottom within the tank is lower as compared to results from traditional open end or closed end inlet supply tubes. It is also speculated that the wall openings and deflecting means tend to distribute turbulent flow that may exist in the conduit into the tank while creating a vertical circular flow pattern. With such a pattern, the inlet encourages water circulation throughout the water heater's tank and reduces the temperature gradients that tend to be generated in such tanks.

Also, when used with a burner-heated system with higher input and perhaps multiple flue tubes, the inlet according to this invention reduces short cycling of the burner and causes it to fire for a longer period of time. This has been discovered to enable better polarization for the cathode, reduce the amount of stress at the weld between the flue(s) and the base, and reduce carbonate precipitation as a result of better thermal balance.

Many modifications to the disclosed embodiments are contemplated. For example, although the top inlet according to this invention confers many benefits when used in a gas-fired commercial water heater, it can be used in any residential water heater as well, heated by any available heat source. Also, the optional end constriction embodiment illustrated in Fig. 5 can be removed entirely or replaced with an alternative construction such as a plug that extends into the conduit, an inwardly bent wall portion of the conduit itself, a twisted end portion of the conduit that defines a constricted outlet diameter, or a welded or otherwise attached component that extends the conduit and positions the constricted opening adjacent to the conduits distal end. In some circumstances it may even prove desirable to entirely close the conduit's end opening in order to direct all of the water flow radially outwardly through the wall openings.

The size and shape of the deflecting means, as well as their number, can vary widely. Although the shape illustrated in the Figures is preferred, it is believed that the surface area and angle of the preferred deflectors may be at least as effective as their shape. For example, a tab or deflector of small width **W** and large height **H** can be exchanged with a deflector of large width **W** and small height **H**. Also, a semicircular deflector with a particular surface area can be exchanged with a deflector having a different shape but a similar surface area, although surface area can be changed as well to suit a particular application. It is also contemplated that the preferred deflectors on the same conduit may differ from one another in terms of their size and/or shape.

The number of preferred deflectors that are positioned in the same plane can vary from a single deflector to 3 or 4 or more, limited only by the diameter and strength of the inlet conduit. The distance between adjacent planes may vary or remain constant if more than two planes of deflecting means are used. Also, the preferred deflectors can be provided in linear rows along the length of the inlet conduit as shown in Fig. 1, for example, or they can be staggered or helically arranged along the conduit's length. While deflectors such as tab **28** are a preferred form of deflecting means, any structure can be alternatively used so long as it is capable of deflecting water flow outwardly through openings in the inlet conduit.

### EXAMPLE 4

An inlet such as the one illustrated in Fig. 7 was constructed and tested in commercial water heaters heated by gas-fired burners. The inlet was tested in comparison to a conventional side inlet that comprised a nipple connected to the tank spuds. The relative inlet performances were measured in relation to so-called "stacking" or "build-up".

In this test, each water heater was allowed to heat up to a predetermined storage tank temperature of 82,2°C (180°F). Immediately after the main burner turned off, water was drawn off at a rate of 18,9 liters (5 gallons) per minute. The draw continued until the heater's thermostat called for heat (the main burner turned on). This cycle was repeated continuously until the measured outlet water temperature did not vary by more than 0,055°C (1°F) for three consecutive draws. The test results are summarized in the following Table 4.

**Table 4**

| Water | Input | Max. Temp. | Temp. | Max. | Temp. | Decrease |
|---|---|---|---|---|---|---|
| Heater | (BTUs) | (°C) | Gradient | Temp. | Gradient | in Temp. |
| Capacity | | (conventional | above 82,2°C | (°C) (Fig. | above | Gradient |
| (liters) | | inlet) | (°C) | 1 inlet) | 82,2°C | (%) |
| | | | (conventional | | (°C) (Fig. | |
| | | | inlet) | | 1 inlet) | |
| 378,53 | 200,000 | 92,2 | 10 | 91,1 | 8,88 | 11 |
| 378,53 | 250,000 | 96,1 | 13,88 | 90,5 | 8,33 | 40 |
| 378,53 | 300,000 | 93,8 | 11,66 | 91,1 | 8,88 | 24 |

The tests revealed that the temperature gradient resulting from stacking was reduced by replacing a conventional side inlet with the inlet embodiment shown in Fig. 7. The temperature gradient above the 82,2°C (180°F) starting point was reduced by as much as 40%.

### EXAMPLE 5

An inlet such as the one illustrated in Fig. 7 was tested in commercial storage-type water heaters. The inlet was tested in comparison to a conventional side inlet, as in Example 4, to measure relative inlet performance in relation to so-called "draw-off ability", which is the ability of the storage water heater to deliver as much water as possible before the water's outlet temperature drops below a predetermined temperature.

In this test, each storage water heater was allowed to heat up to a predetermined storage tank temperature of 82,2°C (180°F). Once the burners turned off, they were disconnected from the water heater's thermostat. Water was then drawn off at a rate of about 18,9 liters (5 gallons) per minute and the temperature of the outlet water was measured along with its volume. The draw was continued until the outlet temperature dropped to about 65,5°C (150°F). The test results are summarized in the following Table 5.

**Table 5**

| Storage Water | Input | Drawn-off Volume | Drawn-off | Volumetric |
|---|---|---|---|---|
| Heater Capacity | (BTUs) | (liters) | Volume (liters) | Increase |
| (liters) | | (conventional inlet) | (Fig. 1 inlet) | (liters) |
| 283,89 | 160,000 | 209 | 273 | 52,6 |
| 302,82 | 250,000 | 282 | 327 | 31,85 |
| 378,53 | 250,000 | 395 | 427 | 26,50 |
| 378,53 | 300,000 | 406 | 418 | 34,06 |

The tests revealed that the drawn-off volume before reaching 65,5°C (150°F) was increased by replacing a conventional side inlet with the inlet embodiment shown in Fig. 7. The drawn-off volume was increased by as much as 53 liters (14 gallons) (30%).

### EXAMPLE 6

An inlet such as the one illustrated in Fig. 7 was further tested in commercial water heaters in relation to so-called "burner on time". The amount of elapsed time was measured between burner shut-off and actuation of the thermostat to call for heat. The test was similar to the test described in Example 5 except, instead of measuring the water temperature, the time until the thermostat calls for heat was measured. The results of this test are summarized in Table 6.

**Table 6**

| Water Heater | Input (BTUs) | Elapsed Time | Elapsed Time | Time |
|---|---|---|---|---|
| Storage Capacity | | (seconds) | (seconds) (Fig. | Increase |
| (liters) | | (conventional inlet) | 1 inlet) | (seconds) |
| 283,89 | 160,000 | 71 | 75 | 4 |
| 302,82 | 250,000 | 125 | 126 | 1 |
| 378,53 | 250,000 | 171 | 192 | 21 |
| 378,53 | 300,000 | 343 | 403 | 60 |
| 283,89 | 300,000 | 429 | 443 | 14 |

This test revealed that the amount of time in between the point when the burners are turned off and the point when the thermostat later calls for heat was significantly increased by replacing a conventional side inlet with the inlet embodiment shown in Fig. 7. The time was increased by as much as 60 seconds (17%), which is expected to reduce thermostat cycling and tank fatigue.

The exact reason for these significant benefits is not certain. Nevertheless, it is speculated that the shape of the inlet conduit, together with the utilization of means for deflecting the water flow path, creates a beneficial flow pattern. It is similar to the flow pattern created when one places a finger or thumb over the end of a hose to modify the flow path. This so-called "hose spray effect" encourages water circulation throughout the water heater's tank. It also reduces the temperature gradients that tend to be generated in such tanks.

Although this invention has been described with reference to specific forms selected for illustration in the drawings, and with respect to various modifications thereof, it will be appreciated that many other variations may be made without departing from the feature of reducing the generation of temperature gradients within a water heater tank.

## Claims

1. An inlet(10) adapted for delivering water into a water heater tank through a port defined in a wall (32) of said tank, said inlet (10) comprising an inlet conduit having a longitudinally extending flow passageway, a proximal portion (12A) defining a flow opening for water flow into said flow passageway, and a distal portion (12B) extending from said proximal portion and having an end opening (26) facing towards a bottom of said tank, wherein a plurality of wall openings (30) are defined in said inlet conduit for water flow from said flow passageway, said inlet also comprising deflecting means (28) extending within said inlet conduit and into a path of said water flow, said deflecting means being positioned downstream from and adjacent to at least one of said wall openings for deflecting at least a portion of said water flow outwardly through said wall openings, said inlet conduit being provided with a central region (c) of unobstructed flow through a plane in which said deflecting means extend, **characterised in that** a ring-type groove (22) is formed in the outer surface of a fitting (14) engaging the proximal portion (12A), said ring-shaped groove being adapted to permit rotational movement of the inlet conduit with respect to the fitting along its axis.

2. The inlet as claimed in claim 1, **characterized in that** said inlet conduct is substantially tubular with a substantially constant flow passage through said proximal portion.

3. The inlet as claimed in claim 1 or 2, **characterized in that** said end opening defines a flow opening that is smaller in cross-sectional area than said flow passageway.

4. The inlet as claimed in claim 1, 2 or 3, **characterized in that** said deflecting means comprises at least one surface positioned substantially adjacent to and within said wall of said inlet conduit and extending at an angle from said wall toward said path of said water flow.

5. The inlet as claimed in claim 4, **characterized in that** said surface comprises a tab formed integrally with said wall at a position downstream from and adjacent to one of said wall openings.

6. The inlet as claimed in claim 5, **characterized in that** said tab extends inwardly towards a central region of said flow passageway at an acute angle with respect to said wall.

7. The inlet as claimed in anyone of the claims 1 to 6, **characterized in that** said deflecting means comprises a plurality of surfaces positioned substantially adjacent to and within said wall of said inlet conduit.

8. The inlet as claimed in claim 7, **characterized in that** at least some of said deflecting surfaces are spaced along the length of said inlet conduit.

9. The inlet as claimed in anyone of the claims 1 to 8, **characterized in that** a dielectric insulator is positioned between said fitting and said inlet conduit.

10. The inlet as claimed in anyone of the claims 1 to 9, **characterized in that** said inlet is a top inlet arranged to be mounted in a top wall of said tank.

11. The inlet as claimed in anyone of the claims 1 to 9, **characterized in that** said inlet is provided to be applied in a side wall of said tank.

12. A water heater comprising a tank having an inlet defined in a wall thereof, said inlet (10) comprising an inlet conduit having a longitudinally extending flow passageway, a proximal portion (12A) defining a flow opening for water flow into said flow passageway, and a distal portion (12B) extending from said proximal portion and having an end opening (26) facing towards a bottom of said tank, wherein a plurality of wall openings (30) are defined in said inlet conduit for water flow from said flow passageway, said inlet also comprising deflecting means (28) extending within said inlet conduit and into a path of said water flow, said deflecting means being positioned downstream from and adjacent to at least one of said wall openings for deflecting at least a portion of said water flow outwardly through said wall openings, said inlet conduit being provided with a central region (c) of unobstructed flow through a plane in which said deflecting means extend, **characterised in that** a ring-type groove (22) is formed in the outer surface of a fitting (14) engaging the proximal portion (12A), said ring-shaped groove being adapted to permit rotational movement of the inlet conduit with respect to the fitting along its axis.

13. A method for delivering water into a water heater tank through a port defined in a wall (32) of the tank and an inlet (10), the method including delivering water through a flow opening of a proximal portion (12A) of an inlet conduit (12), through a longitudinally extending flow passageway of the inlet conduit (12), and through an end opening (26) of a distal portion (12B) of the inlet conduit (12) towards a bottom of the tank, wherein water flows from the flow passageway through a plurality of wall openings (30) defined in the inlet conduit, at least a portion of the water is deflected outwardly through the wall openings by deflecting means (28) positioned downstream from and adjacent to at least one of the wall openings and extending within the inlet conduit and into a path of the water flow, and at least a portion of the water flows unobstructed through a central region (c) of the inlet conduit, **characterized in that** the method of delivering water includes :
delivering water through an inlet having an inside diameter of about 31.75 mm (1^{1/4"}) or larger;

## Patentansprüche

1. Einlass (10), der zur Abgabe von Wasser in einen Wasserheiztank durch eine Öffnung, die in einer Wand (32) des Tanks definiert ist, ausgebildet ist, wobei der Einlass (10) einen Einlasskanal mit einem sich in Längsrichtung erstreckenden Strömungsdurchgang, einen proximalen Abschnitt (12A), der eine Strömungsöffnung für einen Wasserstrom in den Strömungsdurchgang definiert, und einen distalen Abschnitt (12B), der sich von dem proximalen Abschnitt erstreckt und eine Endöffnung (26) aufweist, die dem Boden des Tanks zugewandt ist, umfasst, wobei mehrere Wandöffnungen (30) in dem Einlasskanal für einen Wasserstrom von dem Strömungsdurchgang definiert sind, wobei der Einlass auch Ablenkmittel (28) umfasst, die sich in dem Einlasskanal und in einen Pfad des Wasserstroms erstrecken, wobei die Ablenkmittel stromabwärts von und neben mindestens einer der Wandöffnungen angeordnet sind, um mindestens einen Teil des Wasserstroms durch die Wandöffnungen nach außen abzulenken, wobei der Einlasskanal mit einer zentralen Region (c) mit unbehindertem Strom durch eine Ebene bereitgestellt ist, in der sich die Ablenkmittel erstrecken, **dadurch gekennzeichnet, dass** eine ringförmige Rille (22) in der Außenfläche eines Anschlussstücks (14) ausgebildet ist, das mit dem proximalen Abschnitt (12A) in Eingriff steht, wobei die ringförmige Rille dazu ausgebildet ist, eine Drehbewegung des Einlasskanals in Bezug auf das Anschlussstück entlang seiner Achse zu ermöglichen.

2. Einlass nach Anspruch 1, **dadurch gekennzeichnet, dass** der Einlasskanal im Wesentlichen rohrförmig ist mit einem im Wesentlichen konstanten Strömungsdurchgang durch den proximalen Abschnitt.

3. Einlass nach Anspruch 1 oder 2, **dadurch gekennzeichnet, dass** die Endöffnung eine Strömungsöffnung definiert, deren Querschnittsfläche kleiner als jene des Strömungsdurchganges ist.

4. Einlass nach Anspruch 1, 2 oder 3, **dadurch gekennzeichnet, dass** das Ablenkmittel mindestens eine Oberfläche umfasst, die im Wesentlichen neben und innerhalb der Wand des Einlasskanals positioniert ist und sich in einem Winkel von der Wand zu dem Pfad des Wasserstroms hin erstreckt.

5. Einlass nach Anspruch 4, **dadurch gekennzeichnet, dass** die Oberfläche eine Lasche umfasst, die integral mit der Wand an einer Position stromabwärts von und neben einer der Wandöffnungen gebildet ist.

6. Einlass nach Anspruch 5, **dadurch gekennzeichnet, dass** sich die Lasche nach innen zu einer zentralen Region des Strömungsdurchgangs in einem spitzen Winkel in Bezug auf die Wand erstreckt.

7. Einlass nach einem der Ansprüche 1 bis 6, **dadurch gekennzeichnet, dass** das Ablenkmittel mehrere Oberflächen umfasst, die im Wesentlichen neben und innerhalb der Wand des Einlasskanals positioniert sind.

8. Einlass nach Anspruch 7, **dadurch gekennzeichnet, dass** mindestens einige der Ablenkflächen entlang der Länge des Einlasskanals beabstandet sind.

9. Einlass nach einem der Ansprüche 1 bis 8, **dadurch gekennzeichnet, dass** ein dielektrischer Isolator zwischen dem Anschlussstück und dem Einlasskanal positioniert ist.

10. Einlass nach einem der Ansprüche 1 bis 9, **dadurch gekennzeichnet, dass** der Einlass ein oberer Einlass ist, der zur Montage in einer oberen Wand des Tanks ausgebildet ist.

11. Einlass nach einem der Ansprüche 1 bis 9, **dadurch gekennzeichnet, dass** der Einlass so bereitgestellt ist, dass er in einer Seitenwand des Tanks verwendet wird.

12. Wassererhitzer, umfassend einen Tank mit einem Einlass, der in seiner Wand definiert ist, wobei der Einlass (10) einen Einlasskanal mit einem sich in Längsrichtung erstreckenden Strömungsdurchgang, einen proximalen Abschnitt (12A), der eine Strömungsöffnung für einen Wasserstrom in den Strömungsdurchgang definiert, und einen distalen Abschnitt (12B), der sich von dem proximalen Abschnitt erstreckt und eine Endöffnung (26) aufweist, die dem Boden des Tanks zugewandt ist, umfasst, wobei mehrere Wandöffnungen (30) in dem Einlasskanal für einen Wasserstrom von dem Strömungsdurchgang definiert sind, wobei der Einlass auch Ablenkmittel (28) umfasst, die sich in dem Einlasskanal und in einen Pfad des Wasserstroms erstrecken, wobei die Ablenkmittel stromabwärts von und neben mindestens einer der Wandöffnungen angeordnet sind, um mindestens einen Teil des Wasserstroms durch die Wandöffnungen nach außen abzulenken, wobei der Einlasskanal mit einer zentralen Region (c) mit unbehindertem Strom durch eine Ebene bereitgestellt ist, in der sich die Ablenkmittel erstrecken, **dadurch gekennzeichnet, dass** eine ringförmige Rille (22) in der Außenfläche eines Anschlussstücks (14) ausgebildet ist, das mit dem proximalen Abschnitt (12A) in Eingriff steht, wobei die ringförmige Rille dazu ausgebildet ist, eine Drehbewegung des Einlasskanals in Bezug auf das Anschlussstück entlang seiner Achse zu ermöglichen.

13. Verfahren zur Abgabe von Wasser in einen Wasserheiztank durch eine Öffnung, die in einer Wand (32) des Tanks definiert ist, und einen Einlass (10), wobei das Verfahren die Abgabe von Wasser durch eine Strömungsöffnung eines proximalen Abschnitts (12A) eines Einlasskanals (12), durch einen sich in Längsrichtung erstreckenden Strömungsdurchgang des Einlasskanals (12) und durch eine Endöffnung (26) eines distalen Abschnitts (12B) des Einlasskanals (12) zu einem Boden des Tanks umfasst, wobei Wasser von dem Strömungsdurchgang durch mehrere Wandöffnungen (30) fließt, die in dem Einlasskanal definiert sind, wobei mindestens ein Teil des Wassers durch die Wandöffnungen durch Ablenkmittel (28), die stromabwärts von und neben mindestens einer der Wandöffnungen angeordnet sind und sich in dem Einlasskanal und in einen Pfad des Wasserstroms erstrecken, nach außen abgelenkt wird, und mindestens ein Teil des Wassers unbehindert durch eine zentrale Region (c) des Einlasskanals strömt, **dadurch gekennzeichnet, dass** das Verfahren zur Abgabe von Wasser Folgendes enthält:
Abgabe von Wasser durch einen Einlass mit einem Innendurchmesser von etwa 31,75 mm (1^{1/4}") oder mehr;
unbehindertes Strömen von Wasser durch eine zentrale Region des Einlasskanals, die eine Querschnittsfläche durch eine Ebene, in der sich die Ablenkmittel erstrecken, aufweist, die im Wesentlichen kleiner als die Querschnittsfläche des Innendurchmessers des Einlasses ist; und
Lenken eines signifikanten Anteils des Wasserstroms durch die Wandöffnungen mit Ablenkmitteln, die mindestens eine im Wesentlichen halbkreisförmige Lasche umfassen, wodurch die Wasserzirkulation in dem Tank gefördert und die Erzeugung von Temperaturgradienten innerhalb des Tanks verringert wird.

## Revendications

1. Entrée (10) adaptée pour amener de l'eau dans un réservoir de chauffe-eau par un orifice défini dans une paroi (32) dudit réservoir, ladite entrée (10) comprenant un conduit d'entrée ayant un passage d'écoulement s'étendant longitudinalement, une partie proximale (12A) définissant une ouverture d'écoulement pour l'écoulement d'eau dans ledit passage d'écoulement, et une partie distale (12B) s'étendant à partir de ladite partie proximale et ayant une ouverture terminale (26) faisant face à un fond dudit réservoir, dans laquelle une pluralité d'ouvertures de paroi (30) sont définies dans ledit conduit d'entrée pour l'écoulement d'eau provenant dudit passage d'écoulement, ladite entrée comprenant également des moyens déflecteurs (28) s'étendant à l'intérieur dudit conduit d'entrée et dans une voie dudit écoulement d'eau, lesdits moyens déflecteurs étant positionnés en aval et à côté d'au moins une desdites ouvertures de paroi pour défléchir au moins une partie dudit écoulement d'eau vers l'extérieur à travers lesdites ouvertures de paroi, ledit conduit d'entrée étant pourvu d'une région centrale (c) d'écoulement non obstrué à travers un plan dans lesquels lesdits moyens déflecteurs s'étendent, **caractérisée en ce qu'**une gorge de type annulaire (22) est formée dans la surface extérieure d'un raccord (14) entrant en prise avec la région proximale (12A), ladite gorge de forme annulaire étant adaptée pour permettre un mouvement rotatif du conduit d'entrée par rapport au raccord le long de son axe.

2. Entrée telle que revendiquée dans la revendication 1, **caractérisée en ce que** ledit conduit d'entrée est sensiblement tubulaire avec un passage d'écoulement sensiblement constant à travers ladite partie proximale.

3. Entrée telle que revendiquée dans la revendication 1 ou 2, **caractérisée en ce que** ladite ouverture terminale définit une ouverture d'écoulement dont l'aire de section transversale est plus petite que celle du passage d'écoulement.

4. Entrée telle que revendiquée dans la revendication 1, 2 ou 3, **caractérisée en ce que** ledit moyen déflecteur comprend au moins une surface positionnée sensiblement à côté et à l'intérieur de ladite paroi dudit conduit d'entrée et s'étendant à un angle de ladite paroi en direction de ladite voie dudit écoulement d'eau.

5. Entrée telle que revendiquée dans la revendication 4, **caractérisée en ce que** ladite surface comprend une patte formée d'un seul tenant avec ladite paroi dans une position en aval et à côté d'une desdites ouvertures de paroi.

6. Entrée telle que revendiquée dans la revendication 5, **caractérisée en ce que** ladite patte s'étend vers l'intérieur en direction d'une région centrale dudit passage d'écoulement à un angle aigu par rapport à ladite paroi.

7. Entrée telle que revendiquée dans l'une quelconque des revendications 1 à 6, **caractérisée en ce que** ledit moyen déflecteur comprend une pluralité de surfaces positionnées sensiblement à côté et à l'intérieur de ladite paroi dudit conduit d'entrée.

8. Entrée telle que revendiquée dans la revendication 7, **caractérisée en ce qu'**au moins certaines desdites surfaces déflectrices sont espacées le long de la longueur dudit conduit d'entrée.

9. Entrée telle que revendiquée dans l'une quelconque des revendications 1 à 8, **caractérisée en ce qu'**un isolateur diélectrique est positionné entre ledit raccord et ledit conduit d'entrée.

10. Entrée telle que revendiquée dans l'une quelconque des revendications 1 à 9, **caractérisée en ce que** ladite entrée est une entrée supérieure agencée pour être montée dans une paroi supérieure dudit réservoir.

11. Entrée telle que revendiquée dans l'une quelconque des revendications 1 à 9, **caractérisée en ce que** ladite entrée est prévue pour être appliquée dans une paroi latérale dudit réservoir.

12. Chauffe-eau comprenant un réservoir ayant une entrée définie dans une paroi de celui-ci, ladite entrée (10) comprenant un conduit d'entrée ayant un passage d'écoulement s'étendant longitudinalement, une partie proximale (12A) définissant une ouverture d'écoulement pour l'écoulement d'eau dans ledit passage d'écoulement, et une partie distale (12B) s'étendant à partir de ladite partie proximale et ayant une ouverture terminale (26) faisant face à un fond dudit réservoir, dans laquelle une pluralité d'ouvertures de paroi (30) sont définies dans ledit conduit d'entrée pour l'écoulement d'eau provenant dudit passage d'écoulement, ladite entrée comprenant également des moyens déflecteurs (28) s'étendant à l'intérieur dudit conduit d'entrée et dans une voie dudit écoulement d'eau, lesdits moyens déflecteurs étant positionnés en aval et à côté d'au moins une desdites ouvertures de paroi pour défléchir au moins une partie dudit écoulement d'eau vers l'extérieur à travers lesdites ouvertures de paroi, ledit conduit d'entrée étant pourvu d'une région centrale (c) d'écoulement non obstrué à travers un plan dans lesquels lesdits moyens déflecteurs s'étendent, **caractérisé en ce qu'**une gorge de type annulaire (22) est formée dans la surface extérieure d'un raccord (14) entrant en prise avec la région proximale (12A), ladite gorge de forme annulaire étant adaptée pour permettre un mouvement rotatif du conduit d'entrée par rapport au raccord le long de son axe.

13. Procédé pour amener de l'eau dans un réservoir de chauffe-eau à travers un orifice défini dans une paroi (32) du réservoir et une entrée (10), le procédé comprenant l'amenée d'eau à travers une ouverture d'écoulement d'une partie proximale (12A) d'un conduit d'entrée (12), à travers un passage d'écoulement s'étendant longitudinalement du conduit d'entrée (12), et à travers une ouverture terminale (26) d'une partie distale (12B) du conduit d'entrée (12) en direction d'un fond du réservoir, dans lequel l'eau s'écoule en provenance du passage d'écoulement à travers une pluralité d'ouvertures de paroi (30) définies dans le conduit d'entrée, au moins une partie de l'eau est défléchie vers l'extérieur à travers les ouvertures de paroi par des moyens déflecteurs (28) positionnés en aval et à côté d'au moins une des ouvertures de paroi et s'étendant à l'intérieur du conduit d'entrée et dans une voie de l'écoulement d'eau, et au moins une partie de l'eau s'écoule sans obstruction à travers une région centrale (c) du conduit d'entrée, **caractérisé en ce que** le procédé d'amenée d'eau comprend:
amener l'eau à travers une entrée ayant un diamètre intérieur d'environ 31,75 mm (1 ¼") ou plus;
faire passer l'eau sans obstruction à travers une région centrale du conduit d'entrée qui a une aire de section transversale, à travers un plan dans lequel lesdits moyens déflecteurs s'étendent, qui est sensiblement plus petite que l'aire de section transversale dudit diamètre intérieur de l'entrée, et
diriger une partie significative de l'écoulement d'eau à travers les ouvertures de paroi avec des moyens déflecteurs comprenant au moins une patte sensiblement semi-circulaire, promouvant ainsi la circulation d'eau à l'intérieur du réservoir et réduisant la génération de gradients de température à l'intérieur du réservoir.
